# EUROPEAN PATENT SPECIFICATION

(11) **EP 1 220 748 B1**
(45) Date of publication and mention of the grant of the patent: **01.12.2004**
(21) Application number: 00964419.6
(22) Date of filing: 28.09.2000
(51) Int. Cl.: B29C 70/52, B29B 15/12

(54) **THERMOPLASTIC PULTRUSION**
THERMOPLASTPULTRUSION
PULTRUSION DE THERMOPLASTIQUES

(30) Priority: 02.10.1999 GB 9923211
(43) Date of publication of application: 10.07.2002
(73) Proprietor: Fibreplas Extrusions Limited, Kidlington, Oxfordshire OX5 1JE (GB)
(72) Inventor: BETTERIDGE, John Reginald, Kidlington, Oxfordshire OX5 1JE (GB); BISHOP, Gordon Roland, Melton Mowbray, Leicestershire LE13 0PB (GB)
(74) Representative: Ratcliffe, Susan Margaret
(86) International application number: PCT/GB2000/003711
(87) International publication number: WO 2001/024993

(56) References cited:
- EP-A- 0 653 290
- WO-A-95/00319
- US-A- 4 883 552
- US-A- 5 176 775
- US-A- 6 090 319

## Description

This invention relates to composites of plastics having fibre reinforcement therein, such as structural plastics composites in which the fibre is comprised of glass fibre, although it will be understood that other fibres may be used.

Hereafter a "strand" of fibre may include multifilaments of such fibre.

It is known to manufacture plastics composites by a method known as pultrusion in which glass fibre strands are drawn or pulled through a resin or plastics mixture and subsequently through a die having a required profile, to be then cured or cooled to form a reinforced composite structure. This process has a number of disadvantages, one being the time taken for curing or cooling which may typically be one to three minutes for the latter. Another is that the surface finish of the composite is not particularly smooth because of the presence of the fibres at the surface. In addition, because pultrusion requires the fibres to be bunched together over the whole of the cross-sectional area of the profile corresponding to the die it will be apparent that the composite structure is effectively reinforced with the glass fibre throughout the whole of its cross-section even though structural considerations may not require this.

It is known to produce structural composites by means of feeding pre-pultruded and cured or cooled lengths of reinforcing rods or strips through central portions of a conventional extrusion die whilst extruding thermoplastic material such as PVC therearound. This produces a composite structural member having a superior surface finish to that of a conventionally pultruded member whilst benefiting from the increased strength imparted by the interior reinforcement. However, a disadvantage is that the process is not continuous and difficulties can be encountered at the interface between the surface of the pultrusion and the PVC so that they may not be satisfactorily joined together.

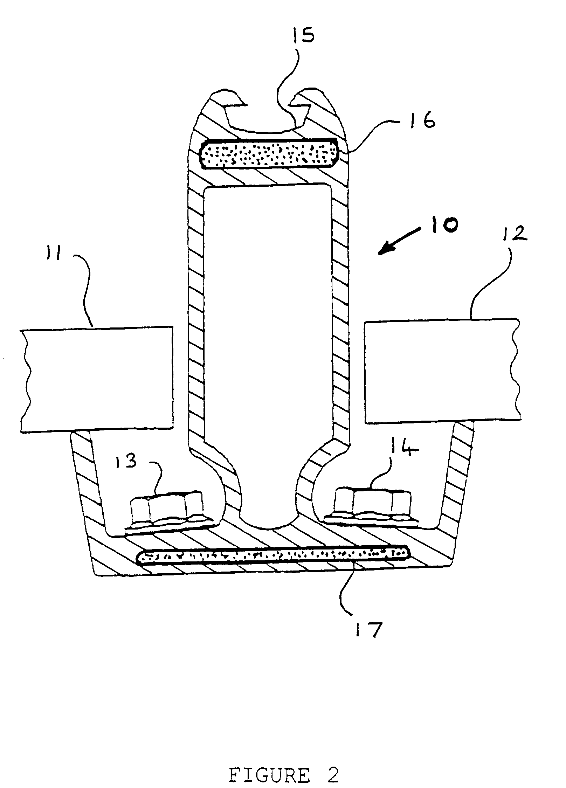

In EP 0653290 there is described a process for the continuous production of moulded thermoplastic resin fibre reinforced articles which includes the concept of impregnating the fibres with a thermoplastic resin of a low viscosity in order to improve "wet out", and in Figure 2 thereof wet out rolls (20) are described which assist in the impregnation process.

According to the invention there is provided a method of producing continuous composite extrusions of thermoplastics material containing continuous bunched strands of fibre reinforcement, the method comprising the steps of providing a thermoplastics material having a relatively high viscosity when melted, providing a polymer of relatively low viscosity when melted and subsequently using that melted polymer to impregnate strands of the fibre reinforcement to form an impregnated bunched strip, extruding melted thermoplastics material through an extrusion die and during extrusion feeding the impregnated strip through the die to form a continuous composite with the thermoplastics material, and thereafter cooling the composite extrusion CHARACTERISED IN THAT as part of the impregnation process for the bunch of strands of fibre reinforcement the fibres are caused to pass though a series of staggered pins or rollers to cause the fibres to intermingle fully with the melted impregnated polymer.

Conveniently, the thermoplastics material of relatively high viscosity is polyvinyl chloride (PVC) and the polymer of relatively low viscosity is glycol-modified polyethylene terephthalate (PET), although other suitable polymers may be used including injection-moulding grade ABS, grafted polypropylene and thermoplastic polyurethane, with varying degrees of success.

Where the thermoplastics material of relatively high viscosity is polypropylene it has been found that a suitable impregnation polymer is an injection moulding grade of polypropylene i.e. one with relatively low viscosity such as one with a reduced molecular weight relative to conventional polypropylene.

In a first embodiment of the method of the invention strands of impregnation polymer are intermingled with strands of glass fibres and then passed through an infra-red pre-heater to melt the polymer sufficient to permit impregnation of the glass strands, whereafter the strands are caused to pass through a series of staggered pins or rollers to cause the fibres to intermingle fully with the melted impregnation polymer. Following this step the impregnated glass fibres are passed through consolidation plates to remove trapped air and excess polymer to form an impregnated bunched strip which may then be fed directly into an extrusion die during the otherwise conventional extrusion of the melted thermoplastics material. This may typically be performed by the use of a crosshead die where the melted high viscosity thermoplastic is fed around the impregnated bunched strip, or strips if there are more than one, prior to extrusion through the die. Following such extrusion the composite is then cooled and hauled off in a conventional manner.

In a second embodiment of the method of the invention the impregnation process occurs following pre-heating of reinforcement fibres after they have been drawn off from respective fibre creels, with heated polymer being separately provided from a crosshead extruder, although it will be understood that any other method of introducing polymer to the reinforcement fibre strands for impregnation thereof may be used including polymers in powder form, in solution or emulsion.

The invention will now be described, by way of example only, with reference to the accompanying drawings in which:
Figure 1 shows in schematic form a production line for forming a continuous thermoplastics reinforced composite in accordance with the invention, and
Figure 2 shows in cross section a structural member in the form of a roofing beam in situ and supporting a pair of oppositely disposed roofing sheets, only part of which are shown.

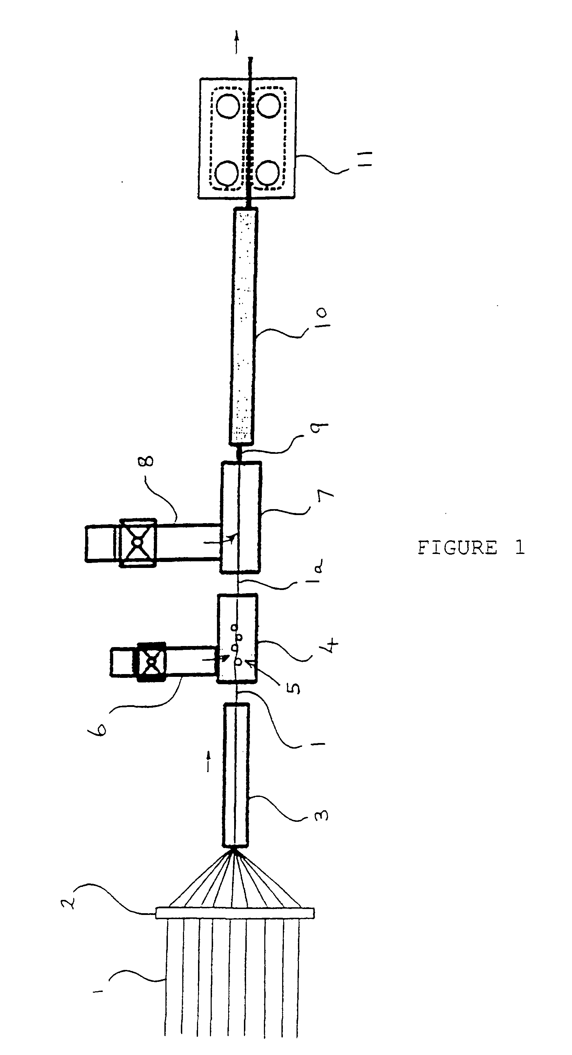

In Figure 1 a number of individual strands or rovings (1) of glass fibre are shown being unwound from their respective creels (not shown) through a spacer bar (2) and thereafter bunched together in a generally flat strip before entering into an elongated hollow heating station (3) where the strands are heated by means of an infra-red pre-heater (not shown) up to approximately 200°C prior to exit therefrom.

The heated glass fibre strands then pass through a polymer impregnation unit (4) comprising a set of staggered pins shown generally at (5) arranged substantially transverse to the longitudinal direction of travel of the fibres (1) so that they are collectively forced to bend slightly around each of the set of pins (5). During this process melted impregnation polymer is fed onto the pins in the direction shown arrowed from a small extruder (6) so that as the strip of fibres (1) negotiate the set of pins (5) they collectively become impregnated with the relatively low viscosity polymer prior to exit from the impregnation unit (4).

On exiting the impregnation unit (4) the impregnated strip (1a) then enters into a cross-head extrusion die (7) which is provided with melted thermoplastics material of relatively high viscosity, such as PVC, via a main extruder (8) with guides (not shown) ensuring that the impregnated strip (1a) is retained centrally in position within the die (7) whilst extruded thermoplastics material flows completely around it. The composite extrusion (9) then emerges from the extrusion die (7) to enter a conventional cooling and shaping unit (10) followed by "haul off" in a conventional manner via haul off unit (11).

Following haul off, the extruded composite therefore has a high quality surface finish by virtue of the use of, typically, PVC as the bulk thermoplastics material but includes in the interior one or more localised areas of stiffening as a result of the presence of the bunched fibre reinforcement. Such reinforcement adheres well to the PVC through the intermediary of the impregnation polymer, without which the fibres would not adhere so well to the PVC in view of the relatively high viscosity thereof when melted.

It will be apparent from the foregoing that the invention may also be used to make hollow extrusions, such as extrusions used in the building industry. It may, for example, be used to manufacture roofing bars for conservatories, which would otherwise typically be manufactured from extruded aluminium in order to meet stiffness criteria and thereafter be covered with one or more plastics strips or covers in order to provide adequate heat insulation.

In Figure 2 there is shown in cross section a composite extrusion made in accordance with the method of the invention in the form of a roofing bar shown generally at 10 for supporting roofing panels 11,12 which may typically be of toughened glass or a transparent plastics material. The beam 10 is secured in place on a bracket (not shown) by bolts 13,14 and is of generally conventional inverted "T"-shaped section having at its upper end a flanged slot 15 for receiving a correspondingly shaped bead portion of a generally "V"-shaped finishing cap (not shown) for securing the panels 11,12 in position.

The roofing bar 10 is primarily made from extruded PVC but includes localised areas of stiffening 16,17, each being composed of bunched strands of fibre reinforcement, such as glass fibre reinforcement, bonded together by a polymer of relatively low viscosity such as glycol-modified PET and subsequently co-extruded through a suitably shaped die with the PVC such that upon the composite extrusion being hauled off and subsequently cooled it may be cut up into suitable lengths. In this instance, the localised stiffening provided by the bunched strips 16,17, provides sufficient rigidity to the beam 10 for it to be used to support the roof of, typically, a conservatory in substitution for a correspondingly shaped beam made of aluminium. This has the advantage in that the beam 10 is thermally very efficient and because a high grade polymer such as PVC can be used, an attractive finish can be achieved. In contrast, a correspondingly shaped roofing bar made of extruded aluminium would normally require capping of plastics material in order to provide sufficient heat insulation and, where necessary, a suitably attractive finish.

The invention therefore also extends to a composite structural member comprising an extrusion of relatively high viscosity thermoplastics material such as PVC including one or more localised areas of stiffening provided by fibre strands, such as glass fibre strands, embedded within a polymer of relatively low viscosity compared to that of the thermoplastics material, such as glycol-modified PET or, where the thermoplastic is polypropylene, by the use of injection-moulding grade ABS, grafted polypropylene and thermoplastic polyurethane, made in accordance with the methods of the invention.

## Claims

1. A method of producing continuous composite extrusions (9,10) of thermoplastics material containing continuous bunched strands (1a) of fibre reinforcement, the method comprising the steps of providing a thermoplastics material having a relatively high viscosity when melted, providing a polymer of relatively low viscosity when melted and subsequently using that melted polymer to impregnate strands (1) of the fibre reinforcement to form an impregnated bunched strip (la,16,17), extruding melted thermoplastics material through an extrusion die (7) and during extrusion feeding the impregnated strip (1a) through the die to form a continuous composite (10) with the thermoplastics material, and thereafter cooling the composite extrusion **CHARACTERISED IN THAT** as part of the impregnation process for the bunch of strands of fibre reinforcement the fibres are caused to pass through a series of staggered pins (5) or rollers to cause the fibres to intermingle fully with the melted impregnated polymer.

2. A method according to Claim 1 further **characterised in that** the thermoplastics material of relatively high viscosity is PVC and the polymer of relatively low viscosity is glycol-modified PET.

3. A method according to Claim 1 or Claim 2 further **characterised by** including the steps of pre-heating the reinforcement fibres (1) to a temperature approximating the melt temperature of the polymer of relatively low viscosity when melted and thereafter impregnating said fibres with the melted low viscosity polymer to form bunched strands (1a) of fibre impregnated with said low viscosity polymer, and thereafter co-extruding said impregnated strands with a polymer of relatively high viscosity to produce a continuous composite extrusion (10) of thermoplastics material containing continuous bunched strands of fibre reinforcement.

4. A method according to Claim 1 or Claim 2 further **characterised in that** the impregnation polymer is initially in strand form and is then intermingled with the strands of fibre reinforcement to thereafter be melted therearound to form an impregnated bunch of fibres, following which said bunch is co-extruded with a polymer of relatively high viscosity to form a composite extrusion.

5. A composite structural member (10) made in accordance with the method of any preceding claim, the structural member including one or more areas of localised stiffening provided by bunched strips (16, 17) of fibre reinforcement.

6. A composite structural member according to claim 5 provided as a glazing bar (10), wherein the bunched strips (16,17) form one or more areas of localised stiffening of said glazing bar.

## Patentansprüche

1. Verfahren zur Herstellung kontinuierlicher Verbundextrusionen (9, 10) aus thermoplastischem Material mit kontinuierlichen gebündelten Fäden (1a) einer Faserverstärkung, wobei das Verfahren die Schritte umfaßt der Bereitstellung eines thermoplastischen Materials mit einer relativ hohen Viskosität in geschmolzenem Zustand, Bereitstellen eines Polymers von relativ niedriger Viskosität in geschmolzenem Zustand und anschließendes Einsetzen dieses geschmolzenen Polymers zum Imprägnieren der Fäden (1) der Faserverstärkung zur Bildung eines imprägnierten gebündelten Streifens (1a, 16, 17), Extrudieren des geschmolzenen thermoplastischen Materials durch ein Extrusionswerkzeug (7), und während der Extrusion Beschicken des imprägnierten Streifens (1a) durch das Werkzeug zur Bildung eines kontinuierlichen Verbundes (10) mit dem thermoplastischen Material und anschließendes Kühlen der Verbundextrusion,
**dadurch gekennzeichnet,**
**daß** als Teil des Imprägnierungsverfahrens für das Bündel der Fäden der Faserverstärkung die Fasern veranlaßt werden, durch eine Reihe von versetzten Stiften (5) oder Rollen zu passieren, um die Fasern zu veranlassen, sich vollständig mit dem geschmolzenen imprägnierten Polymeren zu vermischen.

2. Verfahren gemäß Anspruch 1, **dadurch gekennzeichnet, daß** das thermoplastische Material mit relativ hoher Viskosität PVC ist und das Polymer mit relativ geringerer Viskosität glycolmodifiziertes PET ist.

3. Verfahren gemäß Anspruch 1 oder 2, **dadurch gekennzeichnet, daß** es die Schritte des Vorerhitzens der verstärkten Fasern (1) auf eine Temperatur einschließt, die sich der Schmelztemperatur des Polymer von relativ niedriger Viskosität in geschmolzenem Zustand nähert, und anschließend die Fasern imprägniert mit den geschmolzenen Polymeren niedriger Viskosität zur Bildung gebündelter Fäden (1a) der Fasern, imprägniert mit dem Polymeren niedriger Viskosität, und anschließend die imprägnierten Fäden coextrudiert mit einem Polymer relativ hoher Viskosität zur Herstellung einer kontinuierlichen Verbundextrusion (10) aus thermoplastischem Material, enthaltend kontinuierliche gebündelte Fäden der Faserverstärkung.

4. Verfahren gemäß Anspruch 1 oder 2, **dadurch gekennzeichnet, daß** das Imprägnierungspolymer ursprünglich in Fadenform vorliegt und dann vermischt wird mit den Fäden der Faserverstärkung, um anschließend hierum geschmolzen zu werden zur Bildung eines imprägnierten Bündels von Fasern, woran anschließend das Bündel coextrudiert wird mit einem Polymer relativ hoher Viskosität zur Bildung einer Verbundextrusion.

5. Verbundaufbauelement (10), hergestellt gemäß dem Verfahren eines der vorangehenden Ansprüche, wobei das Aufbauelement einen oder mehrere Bereiche einer lokalisierten Versteifung umfaßt, bereitgestellt durch gebündelte Streifen (16, 17) aus Faserverstärkung.

6. Verbundaufbauelement gemäß Anspruch 5, einen Glanzstab (10) bildend, wobei die gebündelten Streifen (16, 17) einen oder mehrere Bereiche von lokalisierten Versteifungen des Glanzstabes bilden.

## Revendications

1. Procédé de fabrication d'extrusions composites continues (9, 10) de matériau thermoplastique contenant des brins groupés continus (1a) de fibres de renforcement, le procédé comprenant les étapes consistant à prendre un matériau thermoplastique ayant une viscosité relativement élevée lorsqu'il est à l'état fondu, à prendre un polymère de viscosité relativement faible lorsqu'il est à l'état fondu et utiliser par la suite ce polymère fondu pour imprégner des brins (1) de fibres de renforcement afin de former une bande groupée imprégnée (la, 16, 17), à extruder du matériau thermoplastique fondu à travers une filière d'extrusion (7) et, pendant l'extrusion, à introduire la bande imprégnée (1a) à travers la filière pour former un composite continu (10) avec le matériau thermoplastique, et après cela refroidir l'extrusion composite, **CARACTÉRISÉ PAR LE FAIT QU'**en tant que partie du procédé d'imprégnation pour le groupe de brins de fibres de renforcement, les fibres sont amenées à passer à travers une série de broches alternées (5) ou de rouleaux alternés pour amener les fibres à se mêler totalement avec le polymère imprégné fondu.

2. Procédé selon la revendication 1, **caractérisé en outre par le fait que** le matériau thermoplastique de viscosité relativement élevée est du PVC et que le polymère de viscosité relativement faible est du PET modifié par un glycol.

3. Procédé selon la revendication 1 ou la revendication 2, **caractérisé en outre par le fait qu'**il comprend les étapes consistant à pré-chauffer les fibres de renforcement (1) à une température s'approchant de la température de fusion du polymère de viscosité relativement faible lorsqu'il est à l'état fondu et, par la suite, à imprégner lesdites fibres par le polymère de faible viscosité fondu afin de former des brins groupés (1a) de fibres imprégnées par ledit polymère de faible viscosité et, par la suite, à co-extruder lesdits brins imprégnés avec un polymère de viscosité relativement élevée pour produire une extrusion composite continue (10) de matériau thermoplastique contenant des brins groupés continus de fibres de renforcement.

4. Procédé selon la revendication 1 ou la revendication 2, **caractérisé en outre par le fait que** le polymère d'imprégnation est initialement sous forme de brins et est ensuite mêlé avec les brins de fibres de renforcement pour être par la suite fondu autour d'elles afin de former un groupe de fibres imprégnées, après quoi ledit groupe est co-extrudé avec un polymère de viscosité relativement élevée pour former une extrusion composite.

5. Elément structural composite (10) obtenu conformément au procédé tel que défini à l'une quelconque des revendications précédentes, l'élément structural comprenant une ou plusieurs zones de renforcement localisé fournies par des bandes groupées (16, 17) de fibres de renforcement.

6. Elément structural composite selon la revendication 5, fourni en tant que petit-bois (10), dans lequel les bandes groupées (16, 17) forment une ou plusieurs zones de renforcement localisé dudit petit-bois.
